# EUROPÄISCHE PATENTSCHRIFT

(11) **EP 0 540 835 B1**
(45) Veröffentlichungstag und Bekanntmachung des Hinweises auf die Patenterteilung: **06.03.1996**
(21) Anmeldenummer: 92113906.9
(22) Anmeldetag: 14.08.1992
(51) Int. Cl.: C08L 97/00, C08L 61/00, D04H 1/60, F16D 69/02, C04B 35/52

(54) **Bindemittel auf der Basis von Lignin und Kunstharzen**
Binder based on lignin and synthetic resins
Agent liant à base de lignine et de résines synthétiques

(30) Priorität: 07.11.1991 DE 4136562
(43) Veröffentlichungstag der Anmeldung: 12.05.1993
(73) Patentinhaber: RÜTGERSWERKE AKTIENGESELLSCHAFT, D-60326 Frankfurt (DE)
(72) Erfinder: Gardziella, Arno, Dr., W-5810 Witten-Rüdinghausen (DE); Hansen, Achim, Dr., W-5860 Iserlohn-Letmathe (DE); Schröter, Stephan, W-5860 Iserlohn (DE); Suren, Josef, W-4798 Wünnenberg Haaren (DE)

(56) Entgegenhaltungen:
- WO-A-91/09892
- PATENT ABSTRACTS OF JAPAN vol. 12, no. 92 (C-483)(2939) ; & JP-A-62 225 553

## Beschreibung

Die Erfindung betrifft neue Bindemittel, die durch homogenes Vermischen unter Einwirkung hoher Scherkräfte von geeigneten Kunstharzen mit bis zu 60 % Lignin aus dem Organosolv-Verfahren und gegebenenfalls mit einem Härtungsmittel erhalten werden. Diese neuen Bindemittel sind zur Herstellung von härtbaren Formmassen und hochtemperaturbeständigen Formstoffen, wie feuerfesten Erzeugnissen und Kohlenstoffwerkstoffen, ebenso geeignet, wie von Reibbelägen und Textilvliesen.

Während man früher im Bereich von Kohlenstoff bildenden Bindemitteln für Kohlenstoffwerkstoffe und feuerfeste Erzeugnisse hauptsächlich Teere bzw. Peche verwendet hat, die unter anderem polycyklische Kohlenwasserstoffe enthalten, gewinnen heute synthetische Harze, speziell Furan- und Phenolharze, als Bindemittel Bedeutung. Sie sind im Harzzustand frei von toxischen polycyklischen Kohlenwasserstoffen, wie z.B. Benzo-a-pyren und entwickeln solche bei der Pyrolyse nur in sehr untergeordnetem Maße. Sie vermeiden darüber hinaus bei erhöhten Temperaturen Rauch- und Rußentwicklung und verbessern die Qualität und die Verarbeitbarkeit der Feuerfestmassen. Synthetische Harze sind jedoch im Vergleich zu teerstämmigen Bindemitteln relativ teuer.

Aus EP 248 980 A1 sind Bindemittel für hochtemperaturbeständige Formstoffe bekannt, bestehend aus einem solchen Phenolharz mit einem molaren Verhältnis an Phenol und Formaldehyd von 1 : 0,2 bis 1 : 0,55.

Zur Verbilligung des Bindemittels wurden Versuche unternommen, das teure Phenolharz mit preiswerten, vernetzbaren Substanzen zu strecken. Als solche wurden Rückstände aus der Dimethylterephthalat-Herstellung (DE-PS-2723792, DE-OS-3620473 und EP 249959 A1) oder aus der Bisphenol A-Synthese (DE-A 40 15 440) verwendet.

Diese Syntheserückstände sind jedoch nur in begrenzten Mengen zugänglich. Rückstände aus der Dimethylterephthalat-Herstellung besitzen außerdem eine hohe Viskosität und sind deshalb schwer mischbar. Zwar kann durch Zusatz von Lösemitteln oder Ölen die Verarbeitbarkeit verbessert werden, aber beim Erhitzen werden diese flüchtigen Bestandteile zum größten Teil wieder freigesetzt und können unerwünschte Rauch- und Rußbildungen verursachen.

Bekannt sind auch Bindemittelgemische, in denen ein Teil des Phenolharzes durch Ligninsulfonsäure ersetzt worden ist. Das aus dem Zellstoffaufschluß- oder Kraft-Prozess gewonnene sulfonierte Lignin ist an sich reaktionsträge, kann aber zu diesem Zweck durch Umsetzung mit Phenol in Gegenwart einer Säure reaktiviert und durch anschließende Reaktion mit Formaldehyd zu einem geeigneten Harz umgesetzt werden, das mit Phenolharz mischbar ist.

Sulfoniertes Lignin, das in Gegenwart einer Base mit Formaldehyd umgesetzt und anschließend mit Phenol kondensiert worden ist, eignet sich ebenfalls als Streckmittel für Phenolharze (Sundstrom, D. W.; Klei, H. E.; Biotech. Bioeng. Symp. 12, 45 - 56 (1982).

Es zeigte sich jedoch, daß die beschriebenen sulfonierten Ligninderivate nicht in beliebiger Menge mit den Phenolharzen vermischt werden können, da sie die Verarbeitungseigenschaften negativ beeinflussen und mit zunehmendem Ligningehalt die Klebkraft des Harzgemisches stark abnimmt. Ein Phenolharz, das 10 % Ligninsulfonsäurederivat enthält, zeigt bereits keine zufriedenstellenden Eigenschaften mehr und ist vor allem relativ feuchtigkeitsempfindlich.

Ähnlich wie diese Ligninsulfonsäure-Harzgemische verhalten sich auch Harze, die in gleicher Weise unter Verwendung von Kraft-Lignin- oder Alkaliligninfraktionen hergestellt werden können.

Es wurde auch versucht, Phenolharze teilweise durch Organosolv-Lignin zu ersetzen. Dieses chemisch gleichmäßig anfallende schwefelfreie Lignin ist in Ketonen, wie Aceton und Alkoholen, wie z. B. Methanol, löslich und in dieser Form mit einem Phenolnovolak mischbar. Eine Mischung von 1 : 1 Lignin zu Phenolnovolak ergibt bei einem Festharzgehalt von ca. 2 % (bezogen auf das Gewicht des Prüfstabes aus Quarzsand) einen starken Abfall der Kaltbiegefestigkeit und der Heißbiegefestigkeit verglichen mit einer Mischung, die nur Phenolharz als Bindemittel enthält. Beide Festigkeiten nehmen mit zunehmendem Ligninanteil noch stärker ab.

Versuche, die Eigenschaften des Organosolv-Lignins durch vorgeschaltete Reaktionen mit Phenol und Formaldehyd zu verbessern, führten zu keinem nennenswerten Erfolg. Es können auf diese Weise zwar Harzmischungen gewonnen werden, die zur Herstellung von Press- und Verbundplatten, sowie zum Verkleben von Holzfurnieren geeignet sind; hochwertige Produkte, wie hochtemperaturbeständige Formstoffe, feuerfeste Erzeugnisse und insbesondere Reibbeläge, können damit jedoch nicht hergestellt werden, da das physikalische Eigenschaftsprofil der erhaltenen Produkte im allgemeinen nicht ausreicht.

Es ist daher Aufgabe der Erfindung, ein Bindemittelgemisch zur Verfügung zu stellen, das Organosolv-Lignin in größerer Menge als preiswerten und zugleich hochwertigen Rohstoff enthält, wobei das Bindemittelgemisch die oben beschriebenen Anforderungen erfüllt und dessen Qualität die der bisher üblichen ligninhaltigen Bindemittelgemische übertrifft. Es ist weiterhin Aufgabe der Erfindung, ein Verfahren bereitzustellen, durch das die neuen Bindemittelgemische hergestellt werden können.

Die Lösung der Aufgabe besteht in einem Bindemittelgemisch, das durch homogenes Vermischen unter Einwirkung hoher Scherkräfte bei einer Temperatur von 100 bis 200 °C von 5 bis 60 % Lignin oder einer Ligninfraktion aus dem Organosolv-Verfahren mit 40 bis 95 % eines Kunstharzes erhalten wird. Gegebenenfalls kann dieses Bindemittelgemisch mit einem Härtungsmittel versetzt werden. Bevorzugt werden Organosolv-Ligninfraktionen aus Nadel- oder Laubhölzern mit mittleren Molgewichten zwischen 600 bis 4.000, insbesondere mit solchen von 800 bis 1.500 eingesetzt. Als Kunstharze können Phenolnovolake verwendet werden. Zur Härtung kann das Harzgemisch mit Hexamethylentetramin oder mit reaktiven Harzen, wie z. B. Phenolresolen, Epoxidharzen bzw. stickstoffhaltigen Polymeren versetzt sein.

Die erfindungsgemäßen Harzgemische können, nachdem sie in einem beheizbaren Mischer, wie z. B. in einem Doppelschneckenextruder, Trog- oder Muldenkneter, bei erhöhter Temperatur intensiv unter Einwirkung hoher Scherkräfte vermischt worden sind, zur Herstellung von härtbaren Formmassen, Textilvliesen, feuerfesten Massen aber auch von Reibbelägen verwendet werden.

Das im Organosolv-Verfahren unter vergleichsweise milden Bedingungen schwefelfrei anfallende Lignin besitzt, da seine chemische Struktur durch das Einwirken der Prozessbedingungen nur geringfügig verändert worden ist, ein relativ niedriges mittleres Molgewicht.

Abhängig von der Prozessführung fällt dieses Lignin entweder im Gemisch mit Hemicellulosen und anderen Abbauprodukten aus dem Holzaufschluß an oder als reines Lignin, das nach dem Trocknen als Pulver erhalten werden kann. Im Lignin dieser Qualität liegen Verbindungen mit Molgewichten kleiner als 5.000 vor.

Es wurde nun gefunden, daß niedermolekulares Lignin mit einem mittleren Molgewicht von 600 bis 4.000, wie es durch das Organosolv-Verfahren gewonnen werden kann, in besonderer Weise unter Einwirkung hoher Scherkräfte mit Phenolnovolaken vermischt werden kann, wobei ein Bindemittel erhalten wird, das ohne weitere chemische Umsetzung zur Herstellung von härtbaren Formmassen, Textilvliesen, Reibbelägen und feuerfesten Massen verwendet werden kann.

Besonders gut geeignet sind Ligninfraktionen mit mittleren Molgewichten von 800 bis 1.500 und einem Sinterpunkt von 80 bis 120° C. Diese Fraktionen können in an sich bekannter Weise aus den Ligninfraktionen des Organosolv-Verfahrens abgetrennt werden oder fallen in einem 2-stufigen Prozess direkt in basischer, alkoholischer Lösung an. Diese niedermolekularen Lignine können in gelöster Form oder als getrocknetes Pulver mit einem Phenolnovolak bei erhöhter Temperatur unter Einwirkung hoher Scherkräfte vermischt und unter Zusatz eines Härters bei niedrigeren Temperaturen und gegebenenfalls gemeinsam mit zusätzlichen Verarbeitungshilfen zu einem Bindemittel verarbeitet werden, das nach dem Aushärten einen besonders guten Verbund zwischen dem Lignin-Phenolnovolak-Bindemittelgemisch und den zugesetzten Füllstoffen aufweist. Formteile, die mit diesem Bindemittelgemisch hergestellt werden, besitzen überraschenderweise im Gegensatz zu bisher bekannten Organosolv-Lignin-Phenolnovolak-Bindemittelgemischen gute mechanische, thermische und elektrische Eigenschaften, die denen der mit herkömmlichen, nicht modifizierten Phenolharzen hergestellte Formteile gleichkommen. Besonders gute Eigenschaften zeigen sich bei der Verwendung der erfindungsgemäßen Bindemittelgemische zur Herstellung von Feuerfestmassen, da sie feuchtigkeitsunempfindlich sind, hohe Lagerbeständigkeiten aufweisen und zu hohen Grünstandfestigkeiten und überraschenderweise zu hohen Kohlenstoffausbeuten führen.

Zur Herstellung der erfindungsgemäßen Bindemittelgemische werden 5 bis 60 Gew.-% pulverförmiges Organosolv-Lignin und 40 bis 95 Gew.-% eines Phenolnovolaks vorgemischt.

Nach dem Vermischen der Rohstoffe wird das erhaltene Gemisch bei einer Temperatur von 100 bis 200°C, insbesondere bei 130 bis 160°C, durch Einwirkung hoher Scherkräfte homogenisiert. Dieses wird vorzugsweise in an sich bekannten und für derartige Prozesse üblicherweise eingesetzten beheizbaren Geräten, wie z.B. im Doppelschneckenextruder, Trog- oder Muldenkneter oder in einem Co-Kneter durchgeführt. Die Temperatur wird dabei so eingestellt, daß eine gute Vermischung der einzelnen Komponenten miteinander erfolgt, gleichzeitig aber das Lignin-Material teilweise mit dem Phenolharz reagiert, wobei jedoch weder eine Zersetzung des eingesetzten Materials noch eine vorzeitige Aushärtung des Harzgemisches erfolgt.

Aus diesem Arbeitsprozeß wird ein homogenes Produkt erhalten, das nach dem Abkühlen auf Raumtemperatur, evtl. getrocknet pulverisiert werden kann und das sich hervorragend als Bindemittel oder Bindemittelkomponente für Pressmassen, härtbare Formmassen, feuerfeste Massen, Reibmaterialien oder Textilvliese eignet.

Als Novolak sind für diesen Zweck alle im sauren Medium hergestellten Kondensationsprodukte auf der Basis von Phenolen, Kresolen und Bisphenolen mit Formaldehyd in einem molaren Verhältnis von Phenol zu Formaldehyd von 1 : 0,9 bis 1 : 0,2 und einem Schmelzpunkt von 50 bis 110° C einsetzbar. Um schonend zu arbeiten, können Gemische aus nieder- und höherschmelzenden Novolaken Verwendung finden.

Zur weiteren Verarbeitung können diesem Bindemittelgemisch 4 bis 15 Gew.-% eines Härters, vorzugsweise Hexamethylentetramin, hinzugefügt werden. Geeignet sind als Härter aber auch reaktive Harze wie Epoxidharze, Phenolresole, Aminoharze oder deren Gemische in Zusatzmengen von 10 bis 60 Gew.-%. Außerdem können 0,05 bis 1,2 Gew.-% eines Gleit- und Trennmittels, 4 bis 6 Gew.-% Füllstoffe, aber auch 0 bis 20 Gew.-% Fasermaterialien, wie z. B. Glasfasern zugesetzt werden.

Als Gleit- und Trennmittel werden bevorzugt Me-Stearat (Me = Al, Ca, Mg, Li, Zn) in einer Menge von 0,1 bis 0,8 Gew.-% und Wachs in einer Menge von ebenfalls 0,1 bis 0,8 Gew.-%, insbesondere Amidwachs, Esterwachs, Montanwachs oder Paraffinwachs, zugegeben.

Die im folgenden gegebenen Beispiele dienen zur weiteren Erläuterung der Erfindung, sollen sie jedoch nicht auf diese beschränken.

### Beispiel 1

Nadelholzlignin aus dem Organosolv-Verfahren, hergestellt mit einem mittleren Molekulargewicht von 1000 und einem Sinterpunkt von ca. 105°C, wird mit einem Phenolnovolak mit einem Schmelzpunkt von DIN ISO 10082 von 80 bis 85°C im Verhältnis 1 : 1 intensiv vermischt.

Das Vorgemisch wird mit 0,3 % Calcium-Stearat versetzt und auf einem Doppelschneckenextruder unter Verwendung hoher Scherkräfte bei 110 bis 150°C homogenisiert und nach dem Erkalten auf 2 mm granuliert. Das Granulat wird auf einer Pralltellermühle feinst vermahlen und nach der Vermahlung mit 7 % Hexamethylentetramin (feinst, pulverförmig) innig vermischt.

### Beispiel 2

Laubholzlignin aus dem Organosolv-Verfahren hergestellt mit einem mittleren Molekulargewicht von 900 und einem Sinterpunkt von 110°C wird mit einem Phenolnovolak mit einem Schmelzpunkt nach DIN ISO 10082 von 75 bis 80°C im Verhältnis 1 : 2 intensiv vermischt.

Das Vorgemisch wird mit 0,3 Gew.-% Calcium-Stearat versehen, auf einem Doppelschneckenextruder unter Verwendung hoher Scherkräfte bei 110 bis 145° C homogenisiert und nach dem Erkalten auf 2 mm granuliert. Das Granulat wird auf einer Pralltellermühle feinst vermahlen und nach Vermahlung mit 6,5 Gew.-% Hexamethylentetramin (feinst, pulverförmig) innig vermischt.

### Beispiel 3

3 kg erfindungsgemäßes Pulverharz aus Beispiel 1 wird mit 2 kg Phenol-Novolak mit einem Schmelzpunkt von 80 bis 85°C nach DIN ISO 10082, 450 g
Hexamethylentetramin,
15 g Montanwachs, 50 g Amidwachs und 3,8 kg Weichholzmehl innig vermischt und auf 100 bis 130°C beheizte Walzen gegeben.

Die Masse wird in einer Walzzeit von etwa 3 Minuten zu einem zusammenhängendem Walzfell verdichtet und homogenisiert.

Das entstandene Walzfell wird abgezogen und nach dem Erkalten zu einem Granulat von < 2 mm vermahlen.

Das Granulat wird im Pressverfahren zu Formkörpern geformt und gehärtet. Die physikalischen Werte der Formkörper liegen erheblich über dem Rahmen der Phenolharzformmassen vom Typ 31 nach DIN 7708. Damit hergestellte Formteile zeichnen sich durch eine gute Oberfläche aus.

### Beispiel 4

70 Gewichtsteile Textilfasergemisch werden mit 30 Gewichtsteilen des Pulverharzes aus Beispiel 1 innig vermischt. Zur Herstellung von Faservlies wird das Material einer aerodynamischen Vliesbildung unterworfen und auf einem Lochsiebblech abgelegt. Das so gewonnene ungehärtete Textilvliesgebilde wird in einem Wärmeschrank bei ca. 120°C vorgewärmt und dann in einer Presse bei 180°C zu Platten von 250 mm x 250 mm verpreßt.

Die so gewonnenen Platten werden bezüglich Festigkeit (Belastung und Durchbiegung) und Geruch mit Produktionsplattenmaterial verglichen bei dem unmodifiziertes Pulverharz auf Phenolharzbasis zur Anwendung kam.

Der Vergleich der Festigkeit ergab keine Unterschiede.

Im Geruchstest (nach Ford) erhielten die so erhaltenen erfindungsgemäßen Produkte Noten von 1,6 bis 2,1, während ligninfreie Produkte Noten von 2,4 bis 2,8 erzielten (die Geruchsqualität steigt mit sinkender Benotung).

### Beispiel 5

70 Gewichtsteile Textilfasergemisch werden mit 30 Gewichtsteilen des Pulverharzes aus Beispiel 2 innig vermischt. Zur Herstellung von Faservlies wird das Material einer aerodynamischen Vliesbildung unterworden und auf einem Lochsiebblech abgelegt. Das so gewonnene ungehärtete Textilvliesgebilde wird in einem Wärmeschrank bei ca. 120°C vorgewärmt und dann in einer Presse bei 180°C zu Platten von 250 mm x 250 mm verpreßt.

Die so gewonnenen Platten werden bezüglich Festigkeit (Belastung und Durchbiegung) und Geruch mit Produktionsplattenmaterial verglichen, bei dem unmodifiziertes Pulverharz auf Phenolharzbasis zur Anwendung kam.

Der Vergleich der Festigkeit ergab keine Unterschiede.

Im Geruchstest (nach Ford) erhielten die so erhaltenen erfindungsgemäßen Produkte Noten von 1,6 bis 2,0.

### Beispiel 6

1,0 kg erfindungsgemäßes Pulverharz aus Beispiel 2 wird mit einer Mischung aus 3 kg Stahlwolle, 1,5 kg Messingspäne, 1 kg Koks, 0,5 kg Graphit,
0,5 kg Polyaramidfaser (2 mm), 0,5 kg Glasfaser (2 mm), 1,5 kg Bariumsulfat, 0,3 kg Hexamethylentetramin (feinst, pulverförmig) und 0,7 kg Magnesiumoxyd intensiv vermischt.

Die Mischung wird in der üblichen Weise zur Herstellung von Reibbelägen verwendet. Der Reibwert ermittelt an Prüfkörpern, welche 30 Sekunden je mm-Schichtdicke bei 170°C verpreßt und 10 Stunden bei 200°C nachgehärtet wurden, liegt bei 0,38 bis 0,41.

### Beispiel 7

9.500 g einer Mischung aus Magnesit verschiedenster Körnungen wird mit 125 g erfindungsgemäßem Pulverharz aus Beispiel 1 sowie 125 g erfindungsgemäßem Pulverharz aus Beispiel 2 sowie 300 g eines 70 %igen wässrigen Phenolresols (Phenol-Formaldehyd-Verhältnis 1 : 1,5) homogen vermischt.

Nach dem Verpressen zu Formkörpern ergibt sich eine Kaltdruckfestigkeit von 83 N/mm.

Die kunstharzgebundenen Formkörper werden dann bis zu einer Temperatur von 180°C erhitzt und dabei gehärtet. Sie besitzen dann eine Festigkeit, die so groß ist, daß sie gut transportiert und in entsprechende Aggregate im Stahlwerk eingebaut werden können.

Die ermittelte Kaltbiegefestigkeit liegt bei den gehärteten Formkörpern bei ca. 19 N/mm.

In einem parallelen Test wurden Formkörper bis 1000°C getempert und ihr Kohlenstoffgehalt ermittelt. Der Kohlenstoffgehalt betrug ca. 58 % bezogen auf die eingesetzte Harzmenge (Pulverharz plus Harzgehalt des Flüssigharzes).

## Patentansprüche

1. Bindemittelgemisch zur Herstellung von Formmassen und Formkörpern hergestestellt, indem 5 bis 60 Gew.-% Lignin oder Ligninfraktion aus dem Organosolv-Verfahren mit 40 bis 95 Gew.-% Phenolnovolak unter Einwirkung hoher Scherkräfte in einem Kneter oder Extruder bei einer Temperatur von 100 bis 200 °C homogen vermischt, vorreagiert und danach gegebenenfalls mit einem Härtungsmittel versetzt werden.

2. Bindemittelgemisch gemäß Anspruch 1, **dadurch gekennzeichnet**, daß es aus Nadelhölzern gewonnenes Lignin enthält.

3. Bindemittelgemisch gemäß Anspruch 1, **dadurch gekennzeichnet**, daß es aus Laubhölzern gewonnenes Lignin enthält.

4. Bindemittelgemisch gemäß den Ansprüchen 1 bis 3, **dadurch gekennzeichnet**, daß zu seiner Herstellung Lignin mit einem mittleren Molgewicht von 800 bis 4.000 Verwendung findet.

5. Bindemittelgemisch gemäß den Ansprüchen 1 bis 3, **dadurch gekennzeichnet**, daß zu seiner Herstellung Lignin mit einem mittleren Molgewicht von 800 bis 1.500 und einem Sinterpunkt von 80 bis 120° C Verwendung findet.

6. Bindemittelgemisch gemäß den Ansprüchen 1 bis 5, **dadurch gekennzeichnet**, daß zu seiner Härtung Hexamethylentetramin oder reaktive Harze, gewählt aus Epoxidharze, Phenolresole, Aminoharzen oder deren Gewische, verwendet werden.

7. Bindemittelgemisch gemäß den Ansprüchen 1 bis 5, **dadurch gekennzeichnet**, daß zu seiner Härtung Harnstoff- oder Melamin-Formaldehyd-Harze verwendet werden.

8. Verfahren zur Herstellung eines Bindemittelgemischs gemäß den Ansprüchen 1 bis 7, **dadurch gekennzeichnet**, daß
a. 5 bis 60 Gew.-% Lignin oder Ligninfraktion aus dem Organosolv-Verfahren mit 40 bis 95 Gew.-% eines Phenolharzes bei einer Temperatur von 100 bis 200°C durch Einwirkung hoher Scherkräfte homogen vermischt werden und
b. das erkaltete, evtl. getrocknete, homogene Gemisch zu einem Granulat mit einer Korngröße kleiner 2 mm vermahlen wird.

9. Verfahren gemäß Anspruch 8 zur Herstellung eines Bindemittelgemischs, **dadurch gekennzeichnet**, daß die Vermischung bei 130 bis 160°C erfolgt.

10. Herstellung eines Bindemittelgemischs nach einem Verfahren gemäß den Ansprüchen 8 und 9, **dadurch gekennzeichnet**, daß als Phenolharz ein Gemisch aus nieder- und höherschmelzenden Phenolnovolaken eingesetzt werden.

11. Verwendung eines Bindemittelgemischs gemäß den Ansprüchen 1 bis 10 zur Herstellung von härtbaren Formmassen.

12. Verwendung eines Bindemittelgemischs gemäß den Ansprüchen 1 bis 10 zur Herstellung von Textilvliesen.

13. Verwendung eines Bindemittelgemischs gemäß den Ansprüchen 1 bis 10 zur Herstellung von Feuerfestmassen.

14. Verwendung eines Bindemittelgemischs gemäß den Ansprüchen 1 bis 10 zur Herstellung von Reibbelägen.

15. Verwendung eines Bindemittelgemischs gemäß den Ansprüchen 1 bis 10 zur Herstellung von Kohlenstoff- und Graphitwerkstoffen.

## Claims

1. A binder mixture for preparing moulding compounds and moulded bodies, prepared by mixing from 5 to 60 % by weight of lignin or lignin fraction from the organosolv process homogeneously with from 40 to 95 % by weight of phenol novolak under the action of high shear forces in a kneader or extruder at a temperature in the range of 100 to 200 °C, pre-reacting it and optionally mixing it with a hardening agent.

2. A binder mixture according to claim 1, **characterized in that** it contains lignin obtained from wood of coniferous trees.

3. A binder mixture according to claim 1, **characterized in that** it contains lignin obtained from wood of deciduous trees.

4. A binder mixture according to claims 1 to 3, **characterized in that** lignin with an average molecular weight of from 800 to 4.000 is used for the preparation thereof.

5. A binder mixture according to claims 1 to 3, **characterized in that** lignin with an average molecular weight of from 800 to 1.500 and a sintering point of from 80 to 120 °C is used for the preparation thereof.

6. A binder mixture according to claims 1 to 5, **characterized in that** hexamethylenetetramine or reactive resins of the group of epoxy resins, phenolic resols, amino resins or their mixtures are used for the hardening thereof.

7. A binder mixture according to claims 1 to 5, **characterized in that** urea or melamine formaldehyde resins are used for the hardening thereof.

8. A process for preparing a binder mixture according to claims 1 to 7, **characterized in that**
a) from 5 to 60 % by weight of lignin fraction from the organosolv process is mixed homogeneously with from 40 to 95 % by weight of a phenol resin at a temperature of from 100 to 200 °C by the action of high shear forces, and
b) the cooled and if necessary dried, homogeneous mixture is ground to form granulated material with a grain size of less than 2 mm.

9. A process according to claim 8 for preparing a binder mixture, **characterized in that** the mixing takes place at from 130 to 160 °C.

10. Preparation of a binder mixture in accordance with a process according to claims 8 and 9, **characterized in that** a mixture of lower- and higher-boiling phenol novolaks is used as a phenol resin.

11. Use of a binder mixture according to claims 1 to 10 for producing hardenable moulding compounds.

12. Use of a binder mixture according to claims 1 to 10 for producing textile fleeces.

13. Use of a binder mixture according to claims 1 to 10 for producing refractory compounds.

14. Use of a binder mixture according to claims 1 to 10 for producing friction linings.

15. Use of a binder mixture according to claims 1 to 10 for producing carbon and graphite materials.

## Revendications

1. Mélange de liants pour la préparation de masses de moulage et de corps de façonnage, préparé en mélangeant de manière homogène, à une température de 100 à 200°C, 5 à 60 % en poids de lignine ou de fraction de lignine provenant du procédé organosolv avec 40 à 95 % en poids de novolaque phénolique, sous l'action de fortes forces de cisaillement, dans un pétrisseur ou une extrudeuse, en les faisant préalablement réagir et ensuite en ajoutant éventuellement un agent de durcissement.

2. Mélange de liants suivant la revendication 1, caractérisé en ce qu'il contient de la lignine produite à partir de bois de conifères.

3. Mélange de liants suivant la revendication 1, caractérisé en ce qu'il contient de la lignine produite à partir de bois de feuillus.

4. Mélange de liants suivant l'une des revendications 1 à 3, caractérisé en ce que, pour sa préparation, on utilise de la lignine ayant un poids moléculaire moyen de 800 à 4000.

5. Mélange de liants suivant l'une des revendications 1 à 3, caractérisé en ce que, pour sa préparation, on utilise de la lignine ayant un poids moléculaire moyen de 800 à 1500 et un point de frittage de 80 à 120°C.

6. Mélange de liants suivant l'une des revendications 1 à 5, caractérisé en ce que, pour son durcissage, on utilise de l'hexaméthylènetétramine ou des résines réactives, choisies parmi des résines époxy, des résols phénoliques, des résines amino ou leurs mélanges.

7. Mélange de liants suivant l'une des revendications 1 à 5, caractérisé en ce que, pour son durcissage, on utilise des résines d'urée-formaldéhyde ou de mélamine-formaldéhyde.

8. Procédé de préparation d'un mélange de liants suivant l'une des revendications 1 à 7, caractérisé en ce que
a. on mélange de manière homogène 5 à 60 % en poids de lignine ou d'une fraction de lignine provenant du procédé organosolv avec 40 à 95 % en poids d'une résine phénolique, à une température de 100 à 200°C, sous l'action de fortes forces de cisaillement, et
b. on broie le mélange homogène refroidi, éventuellement séché, pour former un produit de granulation ayant une dimension granulaire inférieure à 2 mm.

9. Procédé de préparation d'un mélange de liants suivant la revendication 8, caractérisé en ce que le mélange a lieu à 130 jusqu'à 160°C.

10. Préparation d'un mélange de liants selon un procédé suivant l'une des revendications 8 et 9, caractérisée en ce qu'on met en oeuvre, comme résine phénolique, un mélange de novolaques phénoliques à faible point de fusion et à point de fusion élevé.

11. Utilisation d'un mélange de liants suivant l'une des revendications 1 à 10, pour la préparation de masses de moulage durcissables.

12. Utilisation d'un mélange de liants suivant l'une des revendications 1 à 10, pour la préparation de voiles textiles.

13. Utilisation d'un mélange de liants suivant l'une des revendications 1 à 10, pour la préparation de masses réfractaires.

14. Utilisation d'un mélange de liants suivant l'une des revendications 1 à 10, pour la préparation de garnitures de friction.

15. Utilisation d'un mélange de liants suivant l'une des revendications 1 à 10, pour la préparation de matériaux en carbone et en graphite.
